(19) Europäisches Patentamt
European Patent Office
Office européen des brevets

(11) Publication number: 0 185 913
A2

# (12) EUROPEAN PATENT APPLICATION

(21) Application number: 85114541.7

(22) Date of filing: 15.11.85

(51) Int. Cl.[4]: C 08 J 3/24
C 08 L 23/02, C 08 L 23/16
C 08 K 5/34

(30) Priority: 15.11.84 IT 2358384

(43) Date of publication of application:
02.07.86 Bulletin 86/27

(84) Designated Contracting States:
BE DE FR GB NL SE

(71) Applicant: Montedison S.p.A.
31, Foro Buonaparte
I-20121 Milan(IT)

(72) Inventor: Giovanardi, Sandro
48, via della Crispa
Focomorto Ferrara(IT)

(74) Representative: Zumstein, Fritz, Dr. et al,
Dr. F. Zumstein Dr. E. Assmann Dipl.-Ing. F. Klingseisen
Bräuhausstrasse 4
D-8000 München 2(DE)

## (54) Process for the preparation of plasto-elastomeric polyolefinic compositions by dynamic vulcanization.

(57) Plasto-elastomeric compositions are prepared which are endowed with an improved processability and consisting of EPDM rubber mixes reticulated with a thermoplastic olefinic polymer, by means of methods of dynamic vulcanization, using as a rubber cross-linking agent (reticulant) a halogenated melamine.

EP 0 185 913 A2

Croydon Printing Company Ltd.

The present invention concerns a process for the preparation, by means of dynamic vulcanization methods, of thermoplastic elastomeric compositions, containing a plastomeric olefinic polymer and an at least partly reticulated elastomeric copolymer.

The preparation of compositions based on thermoplastic polymers and vulcanized rubbers, by means of dynamic vulcanization, is quite known to the Prior Art and has been described in particular in: U.S. Pat. nos. 3.758.643, 3.862.106, 3.037.954 and 2.806.558.

According to said method, the vulcanization of the elastomeric component is effected in mixing or masticating phase with a plastomeric polymer in the molten state, by the action of cross-linking agents which are usually of the conventional type, such as for instance peroxides, azo-compounds, mixtures of sulphur with zinc oxide, substituted urea, thiocarbammates, etc. If in the thus treated mixture there is present a sufficient quantity of plastomeric polymer, the composition will, at the end of the vulcanization of the elastomeric component, retain a good processability characteristics under heat even with high percentages of vulcanized elastomer.

According to French Patent N° 2.408.632, polyolefinic plasto-elastomeric compositions are obtained by means of dynamic vulcanization methods using as cross-linking (reticulating) agent a halogenated phenolic resin or a non-halogenated one, but combined (associated) with halogen donors in combination with a metal oxide (activator).

The compositions obtained through the dynamic vulcanization method, in common with all the compounds based on

mixes of plastomeric polymers with reticulated elastomers, show, however, the drawback of being the more hardly processable or heat-moldable (formable under heat), the higher the percentage of reticulated elastomeric component present in them.

Moreover, in the compositions thus obtained, the elastomeric component will easily show a dishomogeneity in its reticulation (cross-linkage), due to the difficulty of homogeneously dispersing in the composition the vulcanization agents, at the melting temperature of the plastomeric compound, before they become active at such a temperature.

All these drawbacks do negatively influence the processability properties under heat of the compositions obtained.

It has now been found by the Applicant that by dynamic vulcanization methods there may be obtained olefinic plastomeric compositions with EPDM rubbers, endowed, with respect to the compositions of the Prior Art, with an improved processability at the same reticulation degree of the rubbery component, using as a cross-linking or reticulating agent a halogenated melamine comprised by the general formula:

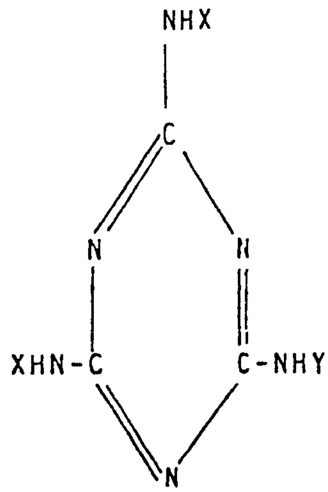

wherein:

X = chlorine or bromine;

Y = chlorine, bromine or hydrogen atoms.

Said reticulating agent may be used either alone by itself or in the presence of reticulation promoters, for instance polyvalent metal oxides (i.e. zinc oxide, lead oxide, magnesium oxide, lead dioxide, lead sesquioxide, calcium oxide, etc.), and/or coagents normally used in the rubber industry (e.g.: guanidine, urea, glycols, mercaptanes, etc.).

More particularly, in said reticulation system the halogenated melamine is present in quantities comprised between 0.2 and 20 parts by weight (p.b.w.), but preferably comprised between 0.5 and 15 p.b.w. on 100 parts by weight of the elastomer component present in the composition to be prepared.

The reticulation activators are present in a weight ratio, with respect to the halogenated melamine, comprised between 0.2:1 and 10:1, but preferably comprised between 1:1.3 and 5:1.

For the purposes of this invention, as an elastomeric

compound there is used a terpolymer of two alpha-olefinic monomers with a conjugated or non-conjugated dienic monomer, this latter being present in quantities comprised between 0.5 and 25% by weight on the total weight of the elastomer.

Examples of usable dienic monomers may be:1.4-hexadiene; 1.5-hexadiene; 2-methyl-1.4-pentadiene; 1,4,9-decatriene; 1.5-cyclooctadiene; 1-methyl-1.5-cyclooctadiene; 1.4-cycloheptadiene; dicyclo-pentadiene; ethylidene-norbornene; butadiene; the substitution derivatives from said monomers.

Examples of alpha-olefinic monomers may be ethylene; propylene; 1-butene; 1-pentene; 1-hexene; 4-methyl-1-pentene; 3.3-dimethyl-1-butene; 3-methyl-1-hexene; 2,4,4-trimethyl-1-pentene.

Preferred are the ethylene-propylene-diene terpolymers containing from 20% to 50% b.w. of copolymerized propylene units.

As olefinic plastomers there may be used polymers obtained by the polymerization of one or more mono-olefines by means of either low- or high-pressure processes, such as for instance: polyethylene, polypropylene, poly-butene-1, poly-4-methyl-1-pentene, poly-1-hexene, poly-5-methyl-1-hexene, poly-3-methyl-1-pentene.

The relative proportions of the elastomeric component and of the plastomeric component inside the compositions, may vary over a wide range.

Thus, for instance, there may be used from 10% to 70% by weight of plastomeric polymer and from 90% to 30% by weight of the elastomeric terpolymer on the mixture of the two.

Preferably there are used from 70% to 40% b.w. of elastomeric terpolymer and from 30% to 60% by weight of plastomeric polymer, on said mixture.

Thus, object of the present invention is a process for preparing plasto-elastomeric compositions, said process consisting in subjecting to mastication a homogeneous mixture consisting of: from 10% to 70% by weight of an olefinic polymer and of from 90% to 30% b.w. of an unsaturated elastomeric terpolymer consisting of two alpha-olefinic monomers and of a dienic monomer, in the presence of a halogenated melamine of the general formula:

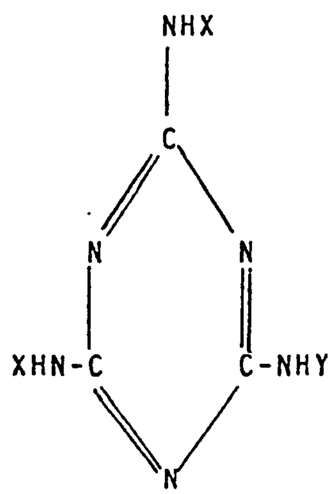

wherein: X = either a chlorine or a bromine atom;

Y = a chlorine, bromine or hydrogen atom,

present in quantities comprised between 0.2 and 20 Parts by weight on 100 p.b.w. of elastomeric terpolymer, at a temperature at which there occurs an at least partial reticulation of the elastomeric terpolymer.

Preferably the homogeneous mixture, comprising the polymers and the halogenated melamine, and in general also the vulcanization accelerators and coadjuvants, is prepared by subjecting the mixture of the components to mastication, at a temperature lower than that at which the reticulation starts, in order to thus obtain a thorough and homogeneous mixing of the elastomer in the molten plastomeric component, in which the elastomer is present in the form of particles in a micron size, preferably comprised between 0.5 and 1 micron.

The mastication and reticulation process may be carried out in an internal mixer or in an extruder, or in a system consisting of an internal mixer and a granulator. One may also operate in a plurality of apparatuses or machines arranged in sequence, ------------------------------ --------------------- where in the first machines there is carried out the thorough mixing and homogenization of the composition, and where in the successive machines is effected the reticulation, while operating throughout in the mixing or mastication step.

In general, the temperature at which the reticulation or cross-linking takes place is comprised between 140° and 250°C, but preferably is comprised between 150°C and 180°C.

The duration of the mastication at the reticulation temperature depends on the degree of reticulation that one wishes to achieve in the elastomer.

In general, the duration of the reticulation or cross-netting stage is comprised between 30 sec. and 10 minutes.

Preferably, the quantity of reticulated elastomer in the final composition is maintained between 90% and 100% by weight on the total quantity of elastomer present. Mineral charges (fillers), carbonblack, coloured pigments, plasticizers, stabilizing agents, extending oils, and in general all the classical ingredients of EPDM-rubber-based compositions, may be present in the mixture that is subjected to mastication and reticulation.

The following examples are given for purely illustrative purposes, without any limiting intention.

Example 1

Operating in an internal mixer, there were prepared plasto-elastomeric compositions, by using the following polymeric components, in the quantities indicated on Table 1:

- EPDM elastomer (DUTRAL TER 537/E2 by Dutral Comp.) consisting, in percent by weight, of 34% of propylene, 58.5% of ethylene and 7.5% b.w. of ethylidene-norbornene, showing a density = 0.87 g/cc; a viscosity (Mooney) (ML 121°C) = 50, and extended with 50% by weight of paraffin oil;
- polypropylene (MOPLEN EP 1x35/AF by HIMONT It. with an M.I. = 8.5 g/10 minutes).

The above mentioned polymers are mixed together with zinc oxide and stearic acid, at a temperature of 155°C, until achieving the melting of the polypropylene. Thereupon there is admixed trichloromelamine and the mixing was then carried out at a temperature of 160°C for about 3 minutes.

During reticulation the temperature equals 160°C with a peak of a few seconds at 170°C.

The composition is then discharged from the mixer and subjected to the following determinations:

- % of reticulated EPDM, by means of solubility tests in xylol at 125°C;
- processability, by measuring the head pressure in the extruder during the extrusion tests.

These tests were carried out on a TR 15 type extruder, operating at a temperature of 190°C, with a spinneret of 2 mm ∅ and L/D ratio = 20; with an output rate of 10 g per minute.

- tension set at 75%, at 100% and at 200% of elongation, measured at 22°C and at 100°C, according to ASTM D-412, on a specimen punched off from an ASTM/I injection molded testpiece.;
- breaking load accord. ASTM D-425/54
- elongation at break acc. ASTM D-425/54
- modulus at 100% elongation ASTM D-425/54
- modulus at 200% elongation ASTM D-425/54
- modulus at 300% elongation ASTM D-425/54
- Shore A hardness ASTM D 2240/68.

On the following Table 1 there have been recorded, besides the quantities of the products used in the mixing, the characteristics of the compositions from 1 to 6, thus obtained.

TABLE 1

| Number of the test: | 1 | 2 | 3 | 4 | 5 | 6 |
|---|---|---|---|---|---|---|
| | parts by weight | | | | | |
| EPDM elastomer (parts by weight) (containing 50% b.w. paraffinic oil) | 200 | 200 | 200 | 200 | 200 | 200 |
| Polypropylene (parts by weight) | 30 | 30 | 45 | 45 | 60 | 60 |
| Zinc oxide (p.b.w.) | 11 | 9 | 11 | 9 | 11 | 9 |
| Stearic acid (p.b.w.) | 3 | 3 | 3 | 3 | 3 | 3 |
| Trichloro-melamine at 100% (p.b.w.) | 12 | 10 | 12 | 10 | 12 | 10 |
| Reticulated elastomer, % on the total of the mixture | 39.06 | 39.68 | 36.90 | 37.45 | 34.96 | 35.46 |
| Reticulated elastomer on the elastomer present (%) | 100 | 100 | 100 | 100 | 100 | 100 |
| Pressure at extruder head ($Kg/cm^2$) | 130 | 125 | 110 | 105 | 90 | 92 |
| Breaking load ($Kg/cm^2$) | 52 | 50 | 65 | 63 | 70 | 68 |
| Elongation at break (%) | 360 | 390 | 330 | 350 | 310 | 330 |
| Elast. modulus at 100% ($Kg/cm^2$) | 19 | 18 | 28 | 27 | 34 | 33 |
| Elast. modulus at 200% ($Kg/cm^2$) | 31 | 29 | 42 | 40 | 48 | 45 |
| Elast. modulus at 300% ($Kg/cm^2$) | 44 | 40 | 58 | 56 | 63 | 60 |
| Tension set at 75% at 22°C (%) | 5 | 6 | 6 | 6 | 8 | 9 |
| Tension set at 100% at 22°C (%) | 6 | 7 | 7 | 8 | 10 | 12 |
| Tension set at 200% at 22°C (%) | 10 | 12 | 11 | 12 | 18 | 19 |
| Tension set at 75% at 100°C (%) | 5 | 6 | 6 | 7 | 8 | 9 |
| Shore A hardness, points | 59 | 58 | 72 | 70 | 78 | 77 |

Example 2

It was proceeded as in example 1, but using the following polymers in the proportions indicated on Table 2:

EPDM/elastomer:= Ethylene-propylene-ethylidenenorbornene (DUTRAL TER 048/E of the firm DUTRAL), having a Mooney ML viscosity (1+4) at 121°C = 65 (according to ASTM 1646/74) and containing 35.5% by weight of propylene, 3.4% by weight of ethylidenenorbornene, in a copolymerized state.

EPDM/elastomer:= Ethylene-propylene-ethylidenenorbornene (DUTRAL TER 535/E by the firm DUTRAL), having a Mooney ML visco. (1+4) at 121°C = 33; with a content in percent by weight of 33% propylene, 3.4% of ethylidenenorbornene, and containing 50% by weight of prevailingly paraffinic oil.

Polypropylene (MOPLEN EPQ 30R by HIMONT It.) having:

A fluidity degree
at 230°C - 2.16 Kg. = 0.75 g/10 min. (ASTM D 1238/L)

Elasticitymodulus
under bending = 12,000 Kg/cm$^2$ (ASTM D 785/B)

Rockwell hardness = 30 alpha (ASTM D 785/B)

Tensile strength = 280 Kg/sq.cm (ASTM D 638)

VICAT viscosity
point with
1 Kg/sq.mm = 150°C (ASTM D 1525)

0185913

TABLE 2

| Number of the test: | 1 | 2 | 3 | 4 |
|---|---|---|---|---|
| EPDM elastomer | | | | |
| DUTRAL TER 048/E (parts by weight) | 20 | 20 | 20 | 20 |
| DUTRAL TER 535/E (p.b.w.) | 160 | 160 | 160 | 160 |
| Polypropylene (parts by weight) | 30 | 30 | 45 | 45 |
| Stearic acid (p.b.w.) | 3 | 3 | 3 | 3 |
| Zinc oxide (p.b.w.) | 10 | 8 | 10 | 8 |
| Trichloromelamine at 100% (p.b.w.) | 10 | 8 | 10 | 8 |
| Reticulated EPDM elastomer % on total mixture | 42.91 | 45.66 | 40.32 | 40.98 |
| Reticul. EPDM elastomer % on the one present | 100 | 100 | 100 | 100 |
| Pressure at extruder head ($Kg/cm^2$) | 110 | 107 | 80 | 78 |
| Breaking load ($Kg/cm^2$) | 45 | 47 | 52 | 55 |
| Elongation at break (%) | 440 | 500 | 350 | 380 |
| Elast. modulus at 100% ($Kg/cm^2$) | 16 | 15 | 18 | 16 |
| Elast. modulus at 200% ($Kg/cm^2$) | 25 | 25 | 27 | 26 |
| Elast. modulus at 300% ($Kg/cm^2$) | 34 | 33 | 37 | 36 |
| Tension set at 75% at 22°C (%) | 4 | 5 | 4 | 6 |
| Tension set at 100% at 22°C (%) | 7 | 8 | 8 | 9 |
| Tension set at 200% at 22°C (%) | 10 | 11 | 12 | 13 |
| Tension set at 75% at 100°C (%) | 5 | 6 | 6 | 7 |
| Shore A hardness, points | 58 | 57 | 65 | 64 |

Example 3

In this example it was proceeeded like in example 1, but using the following polymers in the proportions indicated in Table 3:

- EPDM elastomer: same as that of example 1.
- High density polyethylene (MOPLEN RO QG 6015 prod. by the firm HIMONT It.) showing:

  Fluidity degree at 190°C - 2.16 Kg. = 7.0 9/10' (ASTM 1238/L)

| | | |
|---|---|---|
| Elasticity modulus under bending | = 1350 Kg/cm$^2$ | (ASTM D 790) |
| Rockwell hardness | = 58 alpha | (ASTM D 785/B) |
| Vicat viscosity point with 1 Kg. | = 126°C | (ASTM 1525) |
| Tensile strength | = 320 Kg/cm$^2$ | (ASTM D 683). |

TABLE 3

| Number of the test: | 1 | 2 | 3 | 4 | 5 |
|---|---|---|---|---|---|
| EPDM elastomer (parts by weight) | 200 | 200 | 200 | 200 | 200 |
| High Density Polyethylene (p.b.w.) | 30 | 30 | 30 | 30 | 30 |
| Stearic acid (p.b.w.) | 3 | 3 | 3 | 3 | 3 |
| Zinc oxide (p.b.w.) | 8 | 9 | 10 | 9 | 10 |
| Trichloro-melamine at 100% (p.b.w.) | 8 | 10 | 12 | 10 | 12 |
| EPDM reticulated elastomer on the total of the mixture (%) | 40.16 | 39.68 | 39.21 | 36.76 | 36.36 |
| EPDM reticulated elastomer on the one present (%) | 100 | 100 | 100 | 100 | 100 |
| Pressure at extruder head ($Kg/cm^2$) | 170 | 182 | 190 | 140 | 152 |
| Breaking load ($Kg/cm^2$) | 50 | 55 | 58 | 65 | 70 |
| Elongation at break (%) | 700 | 600 | 550 | 500 | 450 |
| Elast. modulus at 100% ($Kg/cm^2$) | 14 | 16 | 18 | 22 | 25 |
| Elast. modulus at 200% ($Kg/cm^2$) | 20 | 22 | 23 | 28 | 30 |
| Elast. modulus at 300% ($Kg/cm^2$) | 48 | 50 | 55 | 60 | 63 |
| Tension set at 75% at 22°C (%) | 8 | 6 | 4 | 5 | 4 |
| Tension set at 100% at 22°C (%) | 9 | 6 | 5 | 5 | 4 |
| Tension set at 200% at 22°C (%) | 10 | 9 | 8 | 8 | 7 |
| Tension set at 75% at 100°C (%) | 8 | 6 | 5 | 6 | 5 |
| Shore A hardness, points | 54 | 56 | 57 | 68 | 70 |

WHAT WE CLAIM IS:

1. A process for the preparation of plasto-elastomeric compositions, said process consisting in subjecting to mastication a mixture comprising from 10% to 70% by weight of an olefinic polymer and from 90% to 30% by weight of an unsaturated elastomeric terpolymer consisting of two alpha-olefinic monomers and one dienic monomer, in the presence of a reticulating agent consisting of halogenated melamine of the general formula:

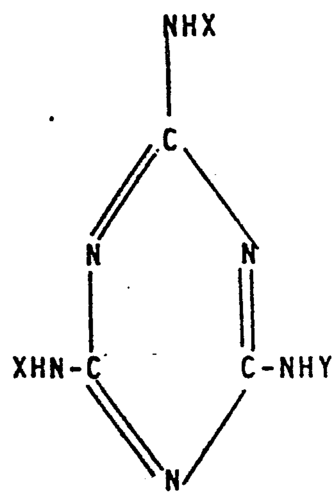

wherein:

X = either chlorine or bromine;

Y = chlorine, bromine or hydrogen,

at a temperature sufficient to melt, at least partially, said olefinic polymer and at which temperature there occurs an at least partial reticulation of the elastomeric terpolymer.

2. Process according to claim 1, wherein the halogenated melamine is present in quantities comprised between 0.2 and 20 parts by weight on 100 parts by weight of the elastomer component.

3. Process according to claim 1, wherein the halogenated melamine is present in quantities comprised between 0.5 and 15 parts by weight on 100 parts by weight of the elastomer component.

4. Process according to claim 1, wherein the halogenated melamine is trichloromelamine.

Milan,

EBS.zm